# FASCICULE DE BREVET EUROPEEN

(11) **EP 2 847 922 B1**
(45) Date de publication et mention de la délivrance du brevet: **26.08.2020**
(21) Numéro de dépôt: 13724194.9
(22) Date de dépôt: 07.05.2013
(51) Int. Cl.: H04L 9/00, G11C 29/52, G01R 31/3181, G09C 1/00

(54) **PROCÉDÉ ET DISPOSITIF POUR L'ÉMISSION D'UN MESSAGE**
VERFAHREN UND SYSTEM ZUR ÜBERTRAGUNG EINER NACHRICHT
METHOD AND DEVICE FOR TRANSMITTING A MESSAGE

(30) Priorité: 11.05.2012 FR 1254329
(43) Date de publication de la demande: 18.03.2015
(73) Titulaire: Idemia Identity & Security France, 92400 Courbevoie (FR)
(72) Inventeur: BERTHIER, Maël, F-92130 Issy Les Moulineaux (FR); BOCKTAELS, Yves, F-92130 Issy Les Moulineaux (FR); BRINGER, Julien, F-92130 Issy Les Moulineaux (FR); LECOCQ, François, F-92130 Issy Les Moulineaux (FR)
(74) Mandataire: Cabinet Le Guen Maillet
(86) Numéro de dépôt international: PCT/EP2013/059519
(87) Numéro de publication internationale: WO 2013/167608

(56) Documents cités:
- WO-A1-2005/076139
- WO-A1-2005/076139
- WO-A1-2010/141661
- WO-A1-2010/141661
- WO-A1-2010/141661
- WO-A1-2012/046029
- WO-A1-2012/046029
- WO-A1-2012/046029
- KR-A- 20070 025 744
- KR-A- 20070 025 744
- US-B1- 6 449 741
- US-B1- 6 449 741
- US-B1- 6 449 741
- JUDE ANGELO AMBROSE ET AL: "A smart random code injection to mask power analysis based side channel attacks", HARDWARE/SOFTWARE CODESIGN AND SYSTEM SYNTHESIS (CODES+ISSS), 2007 5TH IEEE/ACM/IFIP INTERNATIONAL CONFERENCE ON, IEEE, 30 septembre 2007 (2007-09-30), pages 51-56, XP031943143, ISBN: 978-1-59593-824-4
- SOUMENDU BHATTACHARYA ET AL: "A DFT Approach for Testing Embedded Systems Using DC Sensors", IEEE DESIGN & TEST OF COMPUTERS, IEEE SERVICE CENTER, NEW YORK, NY, US, vol. 23, no. 6, 1 juin 2006 (2006-06-01), pages 464-475, XP011152810, ISSN: 0740-7475, DOI: 10.1109/MDT.2006.136
- JUDE ANGELO AMBROSE ET AL: "A smart random code injection to mask power analysis based side channel attacks", HARDWARE/SOFTWARE CODESIGN AND SYSTEM SYNTHESIS (CODES+ISSS), 2007 5TH IEEE/ACM/IFIP INTERNATIONAL CONFERENCE ON, IEEE, 30 septembre 2007 (2007-09-30), pages 51-56, XP031943143, ISBN: 978-1-59593-824-4
- SOUMENDU BHATTACHARYA ET AL: "A DFT Approach for Testing Embedded Systems Using DC Sensors", IEEE DESIGN & TEST OF COMPUTERS, IEEE SERVICE CENTER, NEW YORK, NY, US, vol. 23, no. 6, 1 juin 2006 (2006-06-01), pages 464-475, XP011152810, ISSN: 0740-7475, DOI: 10.1109/MDT.2006.136
- JUDE ANGELO AMBROSE ET AL: "A smart random code injection to mask power analysis based side channel attacks", HARDWARE/SOFTWARE CODESIGN AND SYSTEM SYNTHESIS (CODES+ISSS), 2007 5TH IEEE/ACM/IFIP INTERNATIONAL CONFERENCE ON, IEEE, 30 September 2007 (2007-09-30), pages 51-56, XP031943143, ISBN: 978-1-59593-824-4
- SOUMENDU BHATTACHARYA ET AL: "A DFT Approach for Testing Embedded Systems Using DC Sensors", IEEE DESIGN & TEST OF COMPUTERS, IEEE SERVICE CENTER, NEW YORK, NY, US, vol. 23, no. 6, 1 June 2006 (2006-06-01), pages 464-475, XP011152810, ISSN: 0740-7475, DOI: 10.1109/MDT.2006.136
- GLOBALPLATFORM INC: "GlobalPlatform Card Specification 2.1.1", INTERNET CITATION, 25 March 2003 (2003-03-25), XP002403627, Retrieved from the Internet: URL:http://www.globalplatform.org/specific ationview.asp?id=archived [retrieved on 1077-03-25]

## Description

La présente invention concerne le domaine des systèmes embarqués et plus particulièrement un protocole de communication adapté à une émission de données utilisant des canaux physiques annexes d'un tel système embarqué.

Les cartes à puce connaissent un état dit de « fin de vie » où il n'est plus possible en théorie d'utiliser la carte. La carte se trouve dans cet état suite à une anomalie ou à une attaque. La carte se bloque et refuse tout fonctionnement, afin de conserver l'intégrité des données sensibles qu'elle contient et de s'assurer qu'elles ne sont pas dérobées.

Néanmoins, il serait avantageux de pouvoir connaître le problème à l'origine du passage de la carte dans cet état de fin de vie.

Or la carte étant bloquée, il n'est pas possible de communiquer avec elle. De plus, la cause du blocage de la carte pouvant être une attaque, il est important de ne pas compromettre les données sensibles potentiellement contenues dans la carte.

Il est possible d'utiliser un procédé de transmission de données par une carte à puce en fin de vie utilisant des canaux de communication cachés différents des canaux de communications standards de la carte. Ces canaux sont activés par la modulation d'un signal numérique par la modification d'un paramètre matériel de la carte.

De cette manière, la carte dispose d'un moyen d'émission d'une information d'état par un canal strictement monodirectionnel, typiquement asynchrone, qui n'amoindrit en rien la sécurité de la carte.

Toutefois, ces canaux de communications sont très particuliers et, notamment, variables. Du fait, que l'état de fin de vie peut être dû, entre autres raisons possibles, à des dysfonctionnements matériels, on ne peut jamais présager de manière certaine la forme particulière que peut prendre la modification du paramètre matériel de la carte.

Le document Global plateform card spécification 2.1.1 publié le 25 mars 2003 décrit un procédé de transmission par une carte à puce passée en fin de vie, d'informations d'état liées à la cause de passage en fin de vie de la carte à puce.

L'invention vise à résoudre ce problème en proposant un procédé de transmission adapté à un tel canal selon la revendication indépendante 1.

L'invention concerne également une carte à puce selon la revendication indépendante 4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'une carte à puce selon un exemple de réalisation de l'invention.
La Fig. 2 illustre un exemple de signal selon l'invention.
La Fig. 3 illustre l'organigramme du procédé d'émission selon un mode de réalisation de l'invention.
La Fig. 4 illustre l'organigramme du procédé de décodage selon un mode de réalisation de l'invention.

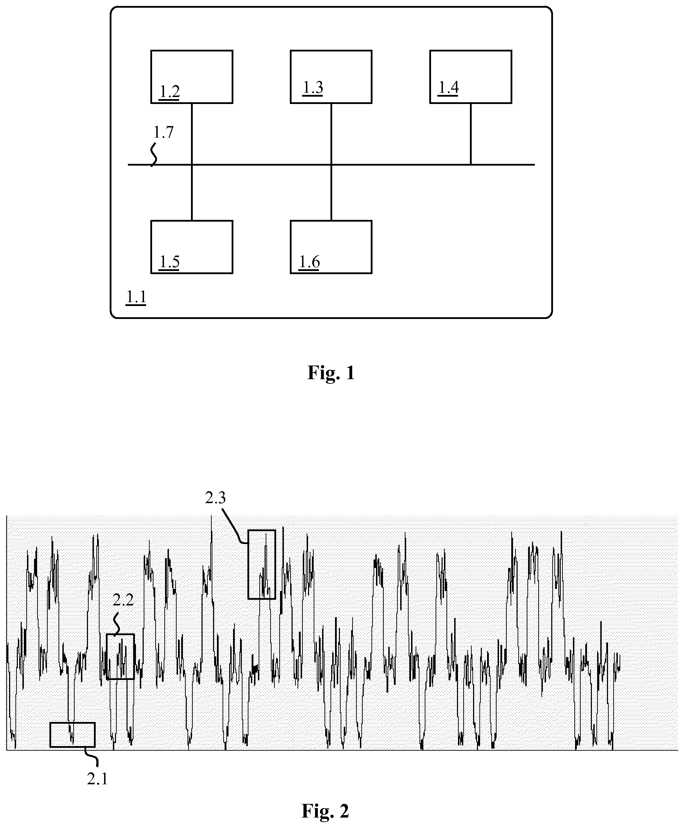

La Fig. 1 illustre l'architecture typique d'une carte à puce 1.1. Elle comprend un processeur 1.2 qui permet d'exécuter des programmes situés en mémoire non volatile 1.3. Ces mémoires non volatiles permettent le stockage et l'enregistrement de données. Ces mémoires peuvent être programmables comme l'EEPROM (*Electrically-Erasable Programmable Read-Only Memory* en anglais) et la mémoire Flash. Elles peuvent aussi ne pas l'être comme la ROM (*Read Only Memory* en anglais). Les données devant être manipulées par ces programmes sont également typiquement situées en mémoire non volatile 1.3. Pour s'exécuter, ces programmes utilisent comme mémoire de travail une mémoire volatile ou mémoire vive 1.4. Les mémoires volatiles comme la RAM (*Random Access Memory* en anglais) permettent quant à elles de stocker et de modifier des données, des variables d'état, des résultats de calculs au cours de l'exécution du logiciel présent dans le composant. Les cartes à puce disposent également typiquement d'un coprocesseur cryptographique 1.5 dédié aux opérations de chiffrement et de déchiffrement. Les entrées sorties s'effectuent par un module d'entrée sortie 1.6 qui permet à la carte de communiquer avec son environnement, typiquement un lecteur de carte. Les communications entre ces différents modules s'effectuent par un bus de communication 1.7.

Une carte fonctionnelle peut décider de passer en fin de vie pour nombre de raisons. Il peut s'agir de la détection d'une attaque ou encore de la détection d'une panne. La procédure de passage en fin de vie comprend plusieurs étapes. Il s'agit de protéger les données sensibles contenues dans la carte. Pour ce faire, toutes les données effaçables sont effacées. Selon le matériel utilisé, il est généralement possible de bloquer l'accès à des pages mémoires en bloquant des plages d'adresses. Typiquement, toutes les plages d'adresses pouvant l'être sont bloquées. Les entrées sorties de la carte sont également bloquées. La carte est ensuite marquée comme étant en fin de vie. Ce marquage est typiquement réalisé par le stockage d'un drapeau (*flag* en anglais) en mémoire. Ce drapeau reste accessible au module de démarrage. C'est par ce biais que ce module de démarrage a la connaissance de l'état de la carte.

On définit un canal de transmission annexe comme étant un canal de transmission de données utilisant la modification contrôlée d'une caractéristique matérielle de la carte, cette modification étant détectable depuis l'extérieur de la carte.

Lorsque la carte passe en fin de vie, des informations sont alors émises par un canal de transmission annexe. Ces informations sont typiquement des informations d'état liées à la cause du passage en fin de vie. Il peut s'agir du module incriminé pour la détection d'une panne. Il peut également s'agir du type d'attaque détecté si la cause du passage en fin de vie est la détection d'une attaque. Il peut également s'agir de tout type d'information dont on souhaite disposer une fois la carte en fin de vie. Cette recopie d'information est typiquement la seule opération supplémentaire liée à l'invention intervenant lors du passage de la carte en fin de vie.

Selon un premier mode de réalisation de l'invention, la caractéristique matérielle utilisée pour le canal annexe est la consommation de courant de la carte. Dans ce mode de réalisation, il est possible de modifier par logiciel la fréquence d'horloge de fonctionnement du processeur de la carte. On peut alors utiliser une instruction choisie du processeur que l'on va appeler à différentes fréquences d'horloge pour coder une information binaire. Selon l'exemple de réalisation, l'instruction 'NOP' est utilisée. Cette instruction ne provoque aucun calcul, toutefois, elle provoque une consommation de courant dépendant de la fréquence d'horloge sélectionnée. Il est à noter que la durée d'exécution de l'instruction dépend également de la fréquence sélectionnée, la durée du symbole codé donc également. Avantageusement un état permet de coder un symbole intermédiaire introduit entre deux symboles binaires. Cela permet de distinguer facilement deux symboles successifs de même valeur.

Selon un autre mode de réalisation, la caractéristique matérielle utilisée est le fonctionnement du coprocesseur cryptographique. Les symboles sont codés sous la forme d'instructions qui utilisent, ou pas, le coprocesseur cryptographique. Un enregistrement des émissions électromagnétiques émises au voisinage de ce coprocesseur permet de récupérer un signal où l'information d'utilisation de ce coprocesseur apparaît.

Il est également possible d'utiliser la température de la carte, dès lors que certaines instructions sont connues pour provoquer un échauffement du processeur, d'autres moins. On peut aussi utiliser le son ou les champs électromagnétiques.

Le principe est que l'information est codée sous la forme d'une évolution détectable et contrôlée d'une caractéristique matérielle de la carte.

Il eût été possible d'utiliser les interfaces physiques de communication de la carte, mais cela aurait demandé d'implémenter un pilote complet de communication au sein du second système. Or, la solution adoptée peut être avantageusement implémentée à l'aide de quelques lignes de codes seulement. Il suffit d'une boucle lisant les données à émettre et les codant sous la forme d'une suite d'instructions permettant de modifier la caractéristique physique choisie. La place mémoire dans une carte à puce étant limitée, cette sobriété est avantageuse.

Il faut aussi noter que la fin de vie pouvant être provoquée par une panne de la carte, plus les ressources utilisées pour implémenter le second système sont limitées et plus les chances qu'il soit opérationnel augmentent.

Le canal de communication ainsi créé est strictement mono directionnel. Cette caractéristique est importante d'un point de vue sécurité. Il n'est pas possible à un attaquant d'utiliser ce canal pour écrire une donnée dans la carte ou pour essayer de provoquer un comportement non désiré de celle-ci.

Le canal est également très variable du fait qu'un dysfonctionnement peut perturber le fonctionnement de la carte et altérer les modifications de la caractéristique physique utilisée par le canal de transmission annexe. Par exemple, l'utilisation de la modification de la consommation de courant peut être altérée par le dysfonctionnement d'un module matériel pouvant provoquer une consommation de courant augmentée ou diminuée. Les seuils et les niveaux des symboles émis seront alors différents de ceux attendus pour une carte en bon état de fonctionnement. Les dysfonctionnements possibles étant nombreux, il est avantageux de ne pas utiliser de connaissance *a priori* sur la forme des symboles codés.

On utilise donc avantageusement trois différents symboles. Un premier symbole code la valeur binaire '1', un second symbole code la valeur binaire '0', tandis que le troisième symbole sert de séparateur. En effet, selon le canal utilisé, la longueur des symboles peut varier et elle peut également être éventuellement modifiée par un dysfonctionnement de la carte. Typiquement, si les symboles sont codés par une modification de la fréquence d'horloge du processeur lors de l'exécution d'une instruction 'NOP', la durée de l'exécution varie en fonction de la fréquence d'horloge. Il est donc possible que la durée du symbole '0' et celle du symbole '1' soient différentes. L'utilisation d'un symbole de séparation permet donc de différencier plusieurs occurrences successives d'un même symbole.

La Fig. 2 illustre un exemple de signal dans le cas où le canal utilise la consommation de courant. Le signal illustré est un extrait d'une capture sur un oscilloscope de l'évolution dans le temps de la consommation de courant. On voit très nettement apparaître les 3 symboles utilisés. Un premier symbole 2.1 code la valeur '0', un second symbole 2.2 sert de séparateur et le troisième symbole 2.3 code la valeur '1'. On voit que chaque symbole est codé par un plateau, c'est-à-dire que le signal reste un certain temps autour d'une valeur cible moyenne sans varier de façon majeure. On voit sur la figure, un premier plateau autour d'une valeur basse de consommation, le plateau 2.1, un second plateau autour d'une valeur moyenne, le plateau 2.2 et un troisième plateau autour d'une valeur haute de consommation 2.3.

Même si les valeurs moyennes de chaque plateau, la durée du plateau ou encore l'écart type des valeurs mesurées au cours du plateau sont affectés par un dysfonctionnement de la carte, il est généralement toujours possible de discriminer les différents symboles. Ceux-ci peuvent alors être appris sans *a priori* sur leur forme.

Selon un exemple de réalisation, l'apprentissage passe par une étape de sélection des motifs de manière manuelle. On délimite sur la courbe affichée le début et la fin de chacun des 3, ou plus, motifs. Plusieurs caractéristiques de ces extraits sont retenues afin d'en ressortir un élément de distinction des motifs. Ces caractéristiques peuvent comprendre la moyenne, l'écart-type, la corrélation ou autres.

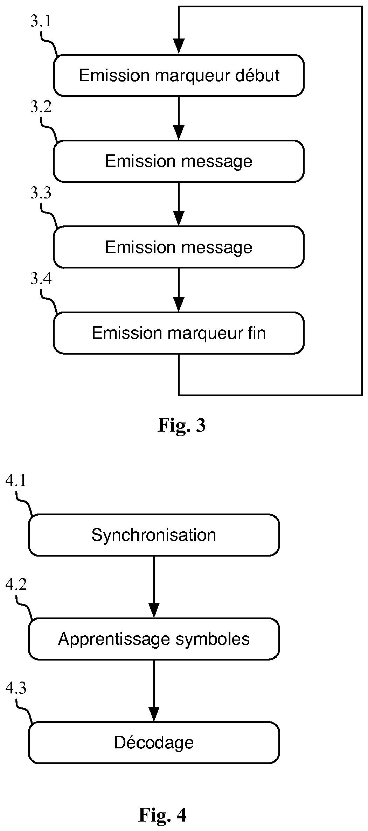

La Fig. 3 illustre le procédé d'émission du message selon un mode de réalisation de l'invention.

Lors d'une étape optionnelle 3.1, on émet un marqueur de début de séquence. Ce marqueur peut avantageusement être constitué d'un quatrième symbole différent des symboles '0', '1' et du symbole séparateur. Lorsqu'il est présent, ce symbole marquant le début de la séquence permet de synchroniser le décodage et facilite la reconnaissance du préambule. Lorsqu'il est absent, on passe directement à l'étape 3.2.

Lors d'une étape 3.2, la carte émet le préambule. Avantageusement, le préambule est constitué d'une succession de symboles '0' et '1' alternés non séparés par le symbole séparateur. Cette succession se termine par une occurrence du symbole séparateur. Par exemple, la séquence émise dans un exemple de réalisation de l'invention est la séquence suivante : 0, 1, 0, 1, 2. où la valeur '2' représente le symbole séparateur. Cette façon de faire permet de distinguer le préambule de la partie signifiante du message. En effet, dans la partie signifiante du message, les symboles '0' et '1' sont toujours séparés par le symbole séparateur '2'. De manière alternative, le symbole séparateur peut n'être inséré qu'entre deux symboles successifs identiques. Le préambule est alors nettement reconnaissable par rapport au message lui-même. Comme il contient une séquence connue de symboles, il est possible de les reconnaître et d'apprendre leur forme.

Lors d'une étape 3.3, la partie signifiante est émise. Cette partie signifiante est constituée d'une succession de symboles '0' et '1' éventuellement séparés par le symbole séparateur '2'.

Lors d'une étape optionnelle 3.4, on émet un marqueur de fin de séquence. Ce marqueur peut avantageusement être constitué d'un cinquième symbole, mais il est également possible de reprendre le quatrième symbole utilisé comme marqueur de début de séquence lorsque les deux marqueurs sont utilisés. Lorsqu'il est présent, ce symbole marquant la fin de la séquence permet de synchroniser le décodage dans le cas où l'émission du message a lieu de manière répétitive. Lorsqu'il n'est pas présent, l'utilisation seule d'un marqueur de début de séquence peut permettre de séparer les différentes copies du message.

Avantageusement, bien que non nécessairement, le message, son préambule ainsi que les éventuels marqueurs de début et/ou de fin de séquence sont réémis de manière régulière. Cette réémission permet de multiplier les acquisitions du même message, une amélioration du rapport signal à bruit pouvant alors être effectuée par corrélation et addition des différentes captures, le bruit ayant tendance à s'annuler tandis que le signal se renforce. C'est un des avantages d'un traitement différé des captures délivrées des contraintes du temps réel.

La Fig. 4 illustre le procédé de décodage correspondant selon un exemple de réalisation de l'invention.

Lors d'une première étape optionnelle 4.1, on effectue une synchronisation sur une capture du signal émis. La capture se fait avantageusement par enregistrement de la trame complète sur un oscilloscope. Cette étape consiste à repérer les marqueurs de début et/ou de fin de séquence s'ils sont présents de manière à caler temporellement la capture. Cela permet de faciliter la reconnaissance du reste du message.

Lors d'une étape 4.2, on effectue l'apprentissage des symboles sur une capture du signal émis. Cet apprentissage est effectué sur le préambule. On cherche donc à détecter la succession alternative de niveaux de signal pouvant correspondre à la succession de symboles '0' et '1' recherchée. On apprend ensuite le symbole séparateur suivant. Avantageusement, si le signal est émis plusieurs fois on effectue une étape optionnelle de corrélation et d'addition des copies du signal pour améliorer le rapport signal à bruit.

Lors d'une étape 4.3, une fois les symboles déterminés, on peut décoder la partie signifiante du décodage à l'aide des symboles appris.

L'exemple de réalisation de l'invention est fait sur un signal de consommation électrique, mais tout type de caractéristique matérielle physique peut être utilisé. Elle donne lieu à une capture de l'évolution temporelle de la mesure de cette caractéristique matérielle et est donc traitée de manière similaire à celle décrite ici pour un niveau de consommation électrique.

L'invention, bien que décrite dans le cadre d'une carte à puce, peut s'appliquer à tout dispositif de traitement de l'information émettant un message sous la forme d'une évolution détectable et contrôlée d'une caractéristique matérielle dudit dispositif.

## Revendications

1. Procédé de transmission par une carte à puce passée en fin de vie, via un canal de transmission de données, d'informations d'état liées à la cause de passage en fin de vie de ladite carte à puce, ledit canal de transmission de données étant un canal de transmission annexe utilisant la modification contrôlée d'une caractéristique matérielle de ladite carte, cette modification étant détectable depuis l'extérieur de ladite carte, lesdites informations étant codées sous forme de symboles, procédé étant tel qu' un symbole est transmis par l'exécution d'une instruction choisie du processeur de ladite carte à puce, ce qui a pour effet une modification de ladite caractéristique matérielle, et:
un symbole est transmis par une instruction qui utilise ou pas le coprocesseur cryptographique de ladite carte à puce selon la valeur du symbole ou
* un symbole est transmis par une instruction dépendant du pouvoir d'échauffement dudit processeur de ladite carte à puce selon la valeur dudit symbole ou
* ladite caractéristique matérielle utilisée par ledit canal annexe étant la consommation de courant de la carte alors que son processeur exécute ladite instruction choisie , un symbole est émis par l'exécution d'une instruction particulière à une fréquence d'horloge de fonctionnement du processeur de la carte qui dépend de la valeur dudit symbole .

2. Procédé de transmission selon la revendication précédente, **caractérisé en ce que** le procédé comporte les étapes de :
- émission d'un préambule constitué d'une succession alternative de symboles codant les valeurs binaires '0' et '1' suivies d'un symbole séparateur ;
- émission d'une partie signifiante constituée d'une succession de symboles '0' et '1' éventuellement séparés par le symbole séparateur '2'.

3. Procédé de transmission selon une des revendications précédentes, **caractérisé en ce que** la transmission d'informations d'état est répétée de manière régulière.

4. Carte à puce passée en fin de vie, telle qu'elle comporte des moyens de transmission via un canal de transmission de données, d'informations d'état liées à la cause de passage en fin de vie de ladite carte à puce, ledit canal de transmission de données étant est un canal de transmission annexe utilisant la modification contrôlée d'une caractéristique
matérielle de ladite carte, cette modification étant détectable depuis l'extérieur de ladite carte, lesdites informations étant codées sous forme de symboles, lesdits moyens de transmission étant aptes à transmettre un symbole par l'exécution d'une instruction choisie du processeur de ladite carte à puce, ce qui a pour effet une modification de ladite caractéristique matérielle, lesdits moyens de transmission étant aptes à:
transmettre un symbole par une instruction qui utilise ou pas le coprocesseur cryptographique de ladite carte à puce selon la valeur du symbole ou à
* transmettre un symbole par une instruction dépendant du pouvoir d'échauffement dudit processeur de ladite carte à puce selon la valeur dudit symbole ou
* ladite caractéristique matérielle utilisée par ledit canal annexe étant la consommation de courant de la carte alors que son processeur exécute ladite instruction choisie à émettre un symbole par l'exécution d'une instruction particulière à une fréquence d'horloge de fonctionnement du processeur de la carte qui dépend de la valeur dudit symbole .

## Patentansprüche

1. Verfahren zur Übertragung durch eine zum Lebensende übergegangene Chipkarte, über einen Datenübertragungskanal, von mit dem Grund für den Übergang zum Lebensende der Chipkarte verbundenen Zustandsinformationen, wobei der Datenübertragungskanal ein Nebenübertragungskanal ist, der die kontrollierte Veränderung eines Hardware-Merkmals der Karte nutzt, wobei diese Veränderung von außerhalb der Karte erfassbar ist, wobei die Informationen in Form von Symbolen codiert sind, derart, dass
* ein Symbol durch die Ausführung einer gewählten Anweisung des Prozessors der Chipkarte übertragen wird, was eine Veränderung des Hardware-Merkmals zur Wirkung hat, und:
* ein Symbol durch eine Anweisung übertragen wird, die den kryptographischen Coprozessor der Chipkarte gemäß dem Wert des Symbols verwendet oder nicht, oder
* ein Symbol durch eine Anweisung übertragen wird, die von der Erwärmungsfähigkeit des Prozessors der Chipkarte gemäß dem Wert des Symbols abhängt, oder
* wenn das vom Nebenkanal verwendete Hardware-Merkmal der Stromverbrauch der Karte ist, während ihr Prozessor die gewählte Anweisung ausführt, ein Symbol durch die Ausführung einer bestimmten Anweisung mit einer Betriebstaktfrequenz des Prozessors der Karte gesendet wird, die vom Wert des Symbols abhängt.

2. Übertragungsverfahren nach dem vorhergehenden Anspruch, **dadurch gekennzeichnet, dass** das Verfahren die folgenden Schritte aufweist:
- Senden einer Präambel bestehend aus einer Wechselfolge von Symbolen, die die Binärwerte '0' und '1' gefolgt von einem Trennsymbol codieren;
- Senden eines signifikanten Teils bestehend aus einer Folge von Symbolen '0' und '1' ggf. getrennt durch das Trennsymbol '2'.

3. Übertragungsverfahren nach einem der vorhergehenden Ansprüche, **dadurch gekennzeichnet, dass** die Übertragung von Zustandsinformationen regelmäßig wiederholt wird.

4. Chipkarte, die zum Lebensende übergegangen ist, derart, dass sie Einrichtungen zur Übertragung, über einen Datenübertragungskanal, von mit dem Grund für den Übergang zum Lebensende der Chipkarte verbundenen Zustandsinformationen aufweist, wobei der Datenübertragungskanal ein Nebenübertragungskanal ist, der die kontrollierte Veränderung eines Hardware-Merkmals der Karte nutzt, wobei diese Veränderung von außerhalb der Karte erfassbar ist, **dadurch gekennzeichnet, dass**, wenn die Informationen in Form von Symbolen codiert sind, ein Symbol durch die Ausführung einer gewählten Anweisung des Prozessors der Chipkarte übertragen wird, was eine Veränderung des Hardware-Merkmals zur Wirkung hat, dass ein Symbol durch eine Anweisung übertragen wird, die den kryptographischen Coprozessor der Chipkarte gemäß dem Wert des Symbols verwendet oder nicht, oder dass ein Symbol durch eine Anweisung übertragen wird, die von der Erwärmungsfähigkeit des Prozessors der Chipkarte gemäß dem Wert des Symbols abhängt, oder das vom Nebenkanal verwendete Hardware-Merkmal der Stromverbrauch der Karte ist, während ihr Prozessor die gewählte Anweisung ausführt, und dass ein Symbol durch die Ausführung einer bestimmten Anweisung mit einer Betriebstaktfrequenz des Prozessors der Karte gesendet wird, die vom Wert des Symbols abhängt.

## Claims

1. Method for the transmission, by a chip card that has reached the end of its life, via a data transmission channel, of status information related to the cause of said chip card reaching the end of its life, said data transmission channel being an auxiliary transmission channel using the controlled modification of a hardware characteristic of said card, this modification being detectable from the outside of this card, said information being coded in the form of symbols, such that a symbol is transmitted by executing a chosen instruction for the processor of said chip card, which has the effect of modifying said hardware characteristic, and:
• a symbol is transmitted by an instruction which uses or does not use the cryptographic processor of said chip card according to the value of the symbol; or
• a symbol is transmitted by an instruction that is dependent on the heating power of said processor of said chip card according to the value of said symbol; or
• said hardware characteristic used by said auxiliary channel being the current consumption of the card while its processor is executing said chosen instruction, a symbol is sent by executing a particular instruction at an operating clock frequency of the processor of the card which is dependent on the value of said symbol.

2. Transmission method according to the preceding claim, **characterized in that** the method includes the steps of:
- sending a preamble consisting of an alternating succession of symbols coding the binary values "0" and "1" followed by a separator symbol;
- sending a meaningful part consisting of a succession of symbols "0" and "1", potentially separated by the separator symbol "2".

3. Transmission method according to either of the preceding claims, **characterized in that** the transmission of status information is repeated regularly.

4. Chip card that has reached the end of its life, such that it includes means for the transmission, via a data transmission channel, of status information related to the cause of said chip card reaching the end of its life, said data transmission channel being an auxiliary transmission channel using the controlled modification of a hardware characteristic of said card, this modification being detectable from the outside of this card, **characterized in that**, said information being coded in the form of symbols, a symbol is transmitted by executing a chosen instruction for the processor of said chip card, which has the effect of modifying said hardware characteristic, that a symbol is transmitted by an instruction which uses or does not use the cryptographic processor of said chip card according to the value of said symbol or that a symbol is transmitted by an instruction that is dependent on the heating power of said processor of said chip card according to the value of said symbol or said hardware characteristic used by said auxiliary channel is the current consumption of the card while its processor is executing said chosen instruction, and that a symbol is sent by executing a particular instruction at an operating clock frequency of the processor of the card which is dependent on the value of said symbol.
